# EUROPÄISCHE PATENTANMELDUNG

(11) **EP 3 023 165 A1**
(43) Veröffentlichungstag der Anmeldung: **25.05.2016**
(21) Anmeldenummer: 14003883.7
(22) Anmeldetag: 19.11.2014
(51) Int. Cl.: B07B 1/12, E03F 5/14

(54) **Spaltsieb**

(71) Anmelder: Stocker Mechatronik GmbH, 6651 Häselgehr (AT)
(72) Erfinder: Stocker, Peter, 6651 Häselgehr (AT)
(74) Vertreter: Torggler & Hofinger Patentanwälte

(57) **Zusammenfassung**

Spaltsieb (1) zur Entnahme von Wasser aus einem fließenden Gewässer, mit einem Rahmen (2) und einer Vielzahl an Profilstäben (3), wobei die Profilstäbe im Montagezustand des Spaltsiebs im Wesentlichen quer zur Strömungsrichtung angeordnet sind, wobei die Profilstäbe im Rahmen lösbar befestigbar sind.

## Beschreibung

Die vorliegende Erfindung betrifft ein Spaltsieb zur Entnahme von Wasser aus einem fließenden Gewässer mit den Merkmalen des Oberbegriffs des Anspruchs 1 sowie eine Vorrichtung zur Entnahme von Wasser aus einem fließenden Gewässer mit einem solchen Spaltsieb.

Im Stand der Technik bekannt sind Spaltsiebe mit parallel angeordneten Profilstäben, wobei diese Profilstäbe im eingebauten Zustand des Spaltsiebs im Wesentlichen quer zu der Strömungsrichtung der das Spaltsieb überströmenden Flüssigkeit stehen. Die Profilstäbe, welche oftmals im Wesentlichen einen halbkreisförmigen oder dreieckigen Querschnitt aufweisen, werden dabei mit geringem Spaltmaß aneinandergereiht auf beispielsweise mehreren Stegen fixiert, wobei die Fixierung der Profilstäbe auf den Stäben üblicherweise über Pressschweißung oder Punktschweißung erfolgt. Durch eine leichte Verkippung der Profilstäbe entlang ihrer Längsachse kann ein leichter Versatz oder eine leichte Anstellung der der Strömungsrichtung zugewandten Kanten der Profilstäbe erreicht werden, wodurch eine gewisse Menge der überströmenden Flüssigkeit mechanisch abgeschert werden kann. Durch das Spaltmaß zwischen den Profilstäben kann die Größe der aus der überströmenden Flüssigkeit mitentnommenen Feststoffe begrenzt werden. Der mechanische Abschereffekt wird zusätzlich durch die molekulare Van-der-Waals-Wechselwirkung zwischen der strömenden Flüssigkeit und der Oberfläche der Profilstäbe verstärkt. Nachteilig bei den im Stand der Technik bekannten entsprechenden Spaltsieben ist jedoch der durch Einsatz in rauen Umgebungen - wie etwa bei Wasserentnahme aus Gebirgsbächen zum Betreiben von Kleinkraftwerken - sich schnell einstellende Verschleiß und damit einhergehend verschlechternde Wirkungsgrad und somit zwangsläufig oft nötige Austausch des gesamten Spaltsiebs. Dies ist stets mit dementsprechend hohem Arbeits-, Kosten- und Zeitaufwand verbunden.

Aufgabe der Erfindung ist es, ein gegenüber dem Stand der Technik verbessertes Spaltsieb zur Entnahme von Wasser aus einem fließenden Gewässer und eine Vorrichtung dafür anzugeben.

Diese Aufgabe wird durch ein Spaltsieb mit den Merkmalen des Anspruchs 1 und einer Vorrichtung zur Entnahme von Wasser aus einem fließenden Gewässer nach Anspruch 15 gelöst. Vorteilhafte Ausführungsformen der Erfindung sind in den abhängigen Ansprüchen definiert.

Dadurch, dass die Profilstäbe im Rahmen lösbar befestigbar sind, können diese etwa im Falle einer Beschädigung der Profilstäbe, beispielsweise durch Geschiebe in Form von über das Spaltsieb gespültem Schotter und/oder Sand, besonders einfach und insbesondere einzeln ausgewechselt werden. Auch können sich dadurch die Montage des Spaltsiebs und auch der Transport desselben zu seinem Einsatzort vereinfachen. Durch die lösbare Befestigung der Profilstäbe im Rahmen ist auch eine modulare Bauweise des Spaltsiebs gegeben, wodurch sich auch Produktionszeiten und somit Kosten senken lassen können.

Besonders vorteilhaft kann sein, dass die Profilstäbe zumindest abschnittsweise, vorzugsweise entlang ihrer gesamten Länge, einen gleichschenklig dreieckigen Querschnitt aufweisen. Dadurch lassen sich einerseits die Auswirkungen des Abscher- und/oder des Anhaftungseffekts der überströmenden Flüssigkeit an den Profilstäben optimieren, andererseits erlaubt solch ein spiegelsymmetrischer Querschnitt ein Wenden des Profilstabs, wodurch sich ein beispielsweise durch Geschiebe an der der Strömungsrichtung zugewandten Kante beschädigter Profilstab eben durch Wenden desselben weiter im Spaltsieb einsetzen lässt. Dadurch kann sich insgesamt die Standzeit des Spaltsiebs erhöhen und es können auch Material, Kosten und Aufwand für die Wartung eingespart werden.

Bevorzugt ist dabei vorgesehen, dass die kurze Seite des der Querschnittsform entsprechenden gleichschenkligen Dreiecks eine Länge von 0,2 bis 5 cm, vorzugsweise 1 cm, aufweist. Durch eine solche Ausgestaltung der Profilstäbe lässt sich eine besonders widerstandsfähige Konstruktion erreichen, die auch bei Einsatz in beispielsweise Gebirgsbächen lange Standzeiten ermöglicht. Zudem kann durch eine solche Dimensionierung der Profilstäbe auf etwaige Einrichtungen zum Abscheiden von Geschiebe aus dem Gewässer, bevor dieses das Spaltsieb überströmt, verzichtet werden.

Als besonders vorteilhaft hat es sich herausgestellt, wenn die Profilstäbe zumindest abschnittsweise, vorzugsweise entlang ihrer gesamten Länge, einen gleichseitig dreieckigen Querschnitt aufweisen. Durch die Ausbildung eines gleichseitig dreieckigen Querschnitts lassen sich die Profilstäbe bei etwaiger Beschädigung der der Strömungsrichtung zugewandten Kante derselben durch Drehen um ihre Längsachse um 120° in sich selbst überführen, wodurch eine etwaige noch nicht beschädigte Kante des Profilstabs zum Abscheiden von Wasser verwendet werden kann. Dadurch können sich ein gleichbleibend hoher Wirkungsgrad und eine hohe Standzeit des Spaltsiebs erreichen lassen. Auch können Aufwand für Wartungsarbeiten, Betriebskosten und Material eingespart werden. Eine gleichseitig dreieckige Ausführung des Querschnitts der Profilstäbe hat also insbesondere den Vorteil, dass alle drei Kanten der Profilstäbe verwendet werden können, was zu einer besonders hohen Lebensdauer des Spaltsiebs führen kann.

Vorteilhaft kann dabei sein, dass die Seitenlänge des der Querschnittsform entsprechenden gleichseitigen Dreiecks eine Länge von 0,2 bis 5 cm, vorzugsweise 1 cm, aufweist. Durch eine geeignete Ausgestaltung der Seitenlänge können die Profilstäbe auf die gewünschte Wasserentnahmerate bzw. maximale Korngröße der mitabgeschiedenen Feststoffe eingestellt werden. Bei einer besonders bevorzugten Ausführung der Profilstäbe kann das Spaltsieb zur Entnahme von Wasser ohne weitere Vorabscheidung von Geschiebe in einem fließenden Gewässer verbaut werden.

Gemäß einem bevorzugtem Ausführungsbeispiel kann vorgesehen sein, dass die Profilstäbe in den Endbereichen profilierte Fortsätze aufweisen. Durch die Ausbildung von profilierten Fortsätzen in den Endbereichen der Profilstäbe kann die Befestigung derselben im Rahmen des Spaltsiebs erleichtert werden. Auch kann dadurch die Wartung, wie etwa das Austauschen bzw. Wenden/Drehen von Profilstäben, erleichtert werden. Es ist grundsätzlich von Vorteil, wenn die Profilierten Fortsätze eine kleinere Querschnittsfläche aufweisen.

Besonders bevorzugt ist dabei vorgesehen, dass die Form des Querschnitts der profilierten Fortsätze im Wesentlichen der Form des Querschnitts der Profilstäbe entspricht. Dies kann die Herstellung der Profilstäbe sowie die Wartung des Spaltsiebs erleichtern. Auch kann dadurch ein richtiges, wiederholgenaues und einfaches Befestigen der Profilstäbe im Rahmen des Spaltsiebs ermöglicht werden.

Ebenso hat es sich als vorteilhaft herausgestellt, dass im Rahmen Ausnehmungen zur Aufnahme der Profilstäbe vorgehen sind. Dadurch lässt sich eine besonders einfache Befestigbarkeit der Profilstäbe im Rahmen ermöglichen. Die Anordnung der Vielzahl an Ausnehmungen zur Aufnahme der Profilstäbe kann dabei einem gewissen Verlauf folgen, der durch die gewünschte Ausgestaltung des Spaltsiebs gegeben ist. Auch können die Ausnehmungen gemäß der gewünschten Anstellung bzw. des gewünschten Versatzes der Profilstäbe orientiert sein.

Ein weiteres bevorzugtes Ausführungsbeispiel sieht vor, dass die Befestigung der Profilstäbe im Rahmen über einen Formschluss erfolgt. Durch eine Befestigung über einen Formschluss lässt sich eine besonders sichere und einfache Anbringung der Profilstäbe im Rahmen erreichen, wobei dies zudem ohne Zuhilfenahme zusätzlicher Befestigungsmittel und/oder Werkzeuge erfolgen kann. Auch ist durch eine solche Befestigung gewährleistet, dass die Profilstäbe die richtige Orientierung bezüglich der Ausrichtung ihrer Längsachse besitzen. Durch eine formschlüssige Befestigung kann ein solches Spaltsieb verfahrenstechnisch einfach und genau hergestellt werden. Durch eine solche Befestigung kann auch ein großes Maß an Verdrehsicherheit der Profilstäbe erreicht werden.

Weiters kann bevorzugt vorgesehen sein, dass die Befestigung der Profilstäbe im Rahmen über eine Verschraubung erfolgt. Durch eine solche Befestigung kann eine einfache Ausführung eines Spaltsiebs erreicht werden, wobei dadurch auch eine Austauschbarkeit der Profilstäbe gegeben ist. Eine Befestigung über eine Verschraubung kann dabei durchaus auch in Verbindung mit einem Formschluss erfolgen.

Als besonders vorteilhaft hat es sich herausgestellt, dass der Rahmen zwei flächige Seitenteile aufweist, zwischen denen die Profilstäbe lösbar befestigbar sind. Durch eine solche Ausgestaltung des Rahmens kann eine kompakte Bauweise des Spaltsiebs erreicht werden. Zudem kann solch ein Rahmen verfahrenstechnisch einfach, schnell und somit kostengünstig - beispielsweise durch ein thermisches Trennverfahren wie Laserschneiden - hergestellt werden.

Als besonders vorteilhaft kann vorgesehen sein, dass der Rahmen zumindest einen Gegenhalter zum Verspannen der Profilstäbe im Rahmen aufweist. Durch zumindest einen solchen Gegenhalter, der beispielsweise eine Kraft lateral zur Längsachse der Profilstäbe auf diese aufbringt, können die Profilstäbe zusätzlich zu deren Befestigung im Rahmen gestützt werden. Dies hat insbesondere den Vorteil, dass auf die Profilstäbe einwirkende Kräfte, etwa durch über das Spaltsieb gespültes Geschiebe, zumindest teilweise in einen anderen Bereich des Rahmens abgeleitet werden können und nicht nur von beispielsweise den Ausnehmungen zur Aufnahme der Profilstäbe im Rahmen aufgenommen werden müssen. Auch kann ein solcher Gegenhalter die Montage der Profilstäbe im Rahmen des Spaltsiebs durch eine zumindest vorübergehende Funktion als Auflager für die Profilstäbe erleichtern. Bei Spaltsieben mit entsprechend langen Profilstäben kann auch mehr als ein Gegenhalter vorgesehen sein.

Als besonders vorteilhaft hat sich herausgestellt, dass der zumindest eine Gegenhalter flächig und mit einer auf Seite der Profilstäbe dem Verlauf der Ausnehmungen zur Aufnahme der Profilstäbe im Rahmen folgenden Rand-Kontur, vorzugsweise mit zusätzlichen entsprechenden Ausnehmungen in den Kontaktpunkten mit den Profilstäben, ausgebildet ist. Durch eine flächige Ausbildung des Gegenhalters lässt sich dieser besonders einfach, schnell und kostengünstig herstellen. Dadurch, dass die in montierter Lage des Gegenhalters mit den Profilstäben in Kontakt stehende Flandfläche desselben eine dem Verlauf der Ausnehmungen zur Aufnahme der Profilstäbe im Rahmen folgende Kontur aufweist, kann eine gleichmäßig auf alle Profilstäbe des Spaltsiebs verteilte Anpresskraft des Gegenhalters sichergestellt werden. Um eine etwaige Beschädigung der Kanten der Profilstäbe sowie eine zusätzlich erhöhte Verdrehsicherheit der Profilstäbe zu erreichen, kann die Randkontur des Gegenhalters zusätzlich in den Kontaktpunkten mit den Profilstäben entsprechend geformte Ausnehmungen aufweisen.

Gemäß einem bevorzugten Ausführungsbeispiel kann vorgesehen sein, dass für den zumindest einen Gegenhalter zumindest eine, vorzugsweise über eine Welle betätigbare, Exzentervorrichtung vorgesehen ist. Durch zumindest eine Exzentervorrichtung für den Gegenhalter kann die Beaufschlagung der Profilstäbe mit einer Kraft durch diesen besonders einfach und leicht einstellbar erfolgen. Dadurch, dass die zumindest eine Exzentervorrichtung über eine Welle betätigbar ist, kann die Kraftbeaufschlagung und die Einstellbarkeit dieser zusätzlich erleichtert werden. Es können für einen Gegenhalter auch mehrere, beispielsweise zwei, Exzentervorrichtungen vorgesehen sein. Dadurch kann sichergestellt werden, dass der Gegenhalter im Wesentlichen über seine gesamte Länge eine Kraft auf die Profilstäbe ausüben kann. Bei Spaltsieben mit mehr als einem Gegenhalter können mehrere jeweils separat nur auf einen Gegenhalter wirkende Exzentervorrichtungen vorgesehen sein.

Schutz wird auch begehrt für eine Vorrichtung zur Entnahme von Wasser aus einem fließenden Gewässer, wobei diese eine Einlaufzone, einen Entnahmebereich und eine Auslaufzone aufweist. Dabei ist vorgesehen, dass der Entnahmebereich zumindest ein Spaltsieb nach einer der beschriebenen Ausführungsformen aufweist. Die Einlaufzone kann dabei der Wasserfassung dienen, wobei dies auch nur einen Teil des fließenden Gewässers, in welches die Vorrichtung zur Entnahme von Wasser eingesetzt wird, umfassen kann. Zudem kann eine geeignete Einlaufzone die Ausbildung einer laminaren Strömung begünstigen, wodurch der Wirkungsgrad der Vorrichtung gesteigert werden kann. Durch die Ausbildung des Entnahmebereichs in Form eines erfindungsgemäßen Spaltsiebs kann eine besonders robuste und somit langlebige Ausführung der Vorrichtung erreicht werden. Der Entnahmebereich kann dabei ein einzelnes oder auch mehrere parallel und/oder hintereinander angeordnete Spaltsiebe umfassen. Durch eine Auslaufzone kann die Vorrichtung besonders gut an den Verlauf des fließenden Gewässers angepasst werden. Auch kann durch eine entsprechend ausgeformte Auslaufzone ein fortwährender Weitertransport von über die Vorrichtung gespültem und nicht abgeschiedenem Geschiebe gewährleistet werden.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigt:
- Fig. 1: eine perspektivische Ansicht eines Spaltsiebs,
- Fig. 2: eine perspektivische Ansicht eines Seitenteils des Rahmens und einen Profilstab,
- Fig. 3: eine perspektivische Ansicht des Gegenhalters und
- Fig. 4: eine Vorrichtung zur Entnahme von Wasser mit einem Spaltsieb.

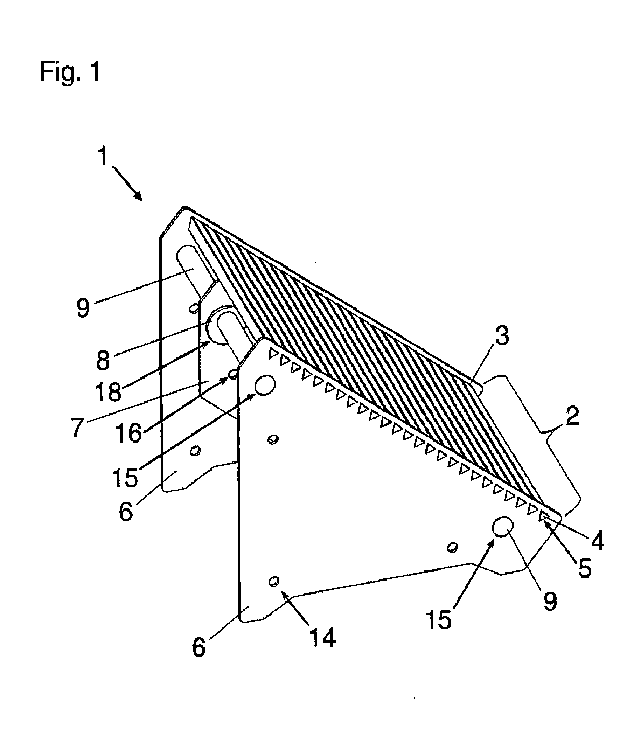

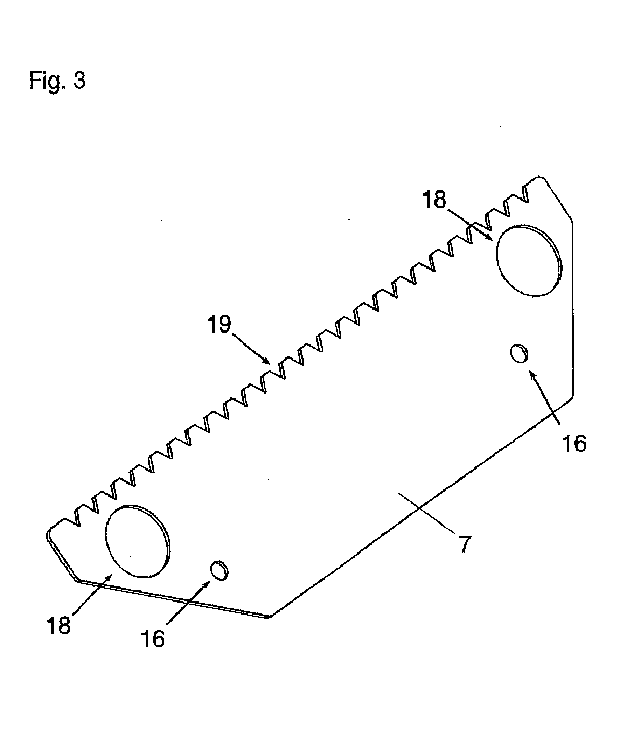

In Figur 1 ist eine besonders bevorzugte Ausführungsform eines Spaltsiebs 1 gezeigt. Dabei ist eine Vielzahl von Profilstäben 3 in einem Rahmen 2, bestehend aus dem Seitenteilen 6, dem über eine Welle 9 mit Exzenter 8 betätigbaren Gegenhalter 7 und nicht gezeigten Spannelementen zur Verspannung des Rahmens 2, befestigt. In der gezeigten Ausführungsform verfügt das Spaltsieb 1 über insgesamt zwei Exzentervorrichtungen 8. Die Profilstäbe 3 weisen in dieser Ausführungsform entlang ihrer gesamten Länge einen gleichseitig dreieckigen Querschnitt auf, wobei die Endbereiche 3b der Profilstäbe 3 als Fortsätze 4 mit kleinerem, jedoch im Wesentlichen der Form des Querschnitts der Profilstäbe entsprechendem Querschnitt ausgebildet sind. In den Seitenteilen 6 ist zur formschlüssigen Aufnahme der Fortsätze 4 eine Vielzahl an Ausnehmungen 5 mit korrespondierendem Querschnitt vorgesehen. Die Seitenteile 6 verfügen weiters über Bohrungen 14 zur Aufnahme der Spannelemente für den Rahmen 2 und Wellenaufnahmen 15 zur Aufnahme der Welle 9 des Exzenters 8. Die Betätigung des Exzenters 8 kann beispielweise über die Welle 9 mittels hier nicht näher dargestellter Eingriffe für ein Werkzeug, beispielweise einen Innen- oder Außensechskant, erfolgen. Zwischen den Seitenteilen 6 des Rahmens 2 ist der Gegenhalter 7 angeordnet, wobei dieser flächig ausgebildet und mit einer dem Verlauf der Ausnehmungen 5 in den Seitenteilen 6 folgenden Randkontur versehen ist (siehe Figur 3). Die Exzentervorrichtung 8 ist im Gegenhalter 7 in einer Exzenteraufnahme 18 drehbar gelagert. In montiertem Zustand des Spaltsiebs 1 sind die Profilstäbe 3 über die Fortsätze 4 formschlüssig in den Ausnehmungen 5 der Seitenteile 6 befestigt und mit den Spannelementen im so ausgebildeten Rahmen verspannt. Durch die formschlüssige Aufnahme der Profilstäbe 3 im Rahmen 2 sind diese optimal verdrehgesichert. Die Profilstäbe 3 können zudem mittels dem über die Welle 9 betätigbaren Exzenter 8 mit dem Gegenhalter 7 zusätzlich im Rahmen verspannt werden, wobei der Gegenhalter 7 durch seine entsprechende Randkontur von der der exponierten Seite der Profilstäbe 3 gegenüberliegenden Seite eine Kraft auf diese ausüben kann. Dadurch kann ein Teil der auf die Profilstäbe 3 einwirkenden Kräfte, wie sie etwa bei Verwendung des Spaltsiebs 1 bei Einsatz in einem Gebirgsbach durch über das Spaltsieb 3 gespültes Geschiebe auftreten können, über die Welle 9 in die Seitenteile 6 des Rahmens 2 abgeleitet werden und so die Ausnehmungen 5 und die Fortsätze 4 geschont werden. Ein besonderer Vorteil der lösbaren Befestigbarkeit der Profilstäbe 3 im Rahmen 2 ist durch eine Auswechselbarkeit der einzelnen Profilstäbe 3 im Falle einer Beschädigung gegeben. Wird etwa nur eine der Strömungsrichtung des das Spaltsieb 1 überströmenden Gewässers zugewandte Kante 3a eines Profilstabs 3 so beschädigt oder abgenützt, dass das Abscheideverhalten und somit der Wirkungsgrad des Spaltsiebs 1 beeinträchtigt wird, so besteht durch die Ausbildung eines wie in diesem Ausführungsbeispiel gezeigten gleichschenklig dreieckigen Querschnitts der Profilstäbe 3 die Möglichkeit, die Profilstäbe 3 jeweils um 120° um deren Längsachse zu drehen und so eine etwa noch unbeschädigte Kante 3a zur Wasserabscheidung zu verwenden. Dadurch kann mit verringertem Material-, Zeit- und Arbeitsaufwand die Lebensdauer des Spaltsiebs 1 erhöht werden. Durch den gleichschenklig dreieckigen Querschnitt der Profilstäbe 3 sowie der Fortsätze 4 können also über die Lebensdauer des Spaltsiebs 1 alle drei Kanten 3a eines jeden Profilstabs 3 verwendet werden. Im Falle einer hier nicht gezeigten Ausbildung des Querschnitts in Form eines gleichschenkligen Dreiecks können durch Wenden eines solchen Profilstabs 3 beide an die Basis angrenzende Kanten 3a zur Wasserentnahme verwendet werden.

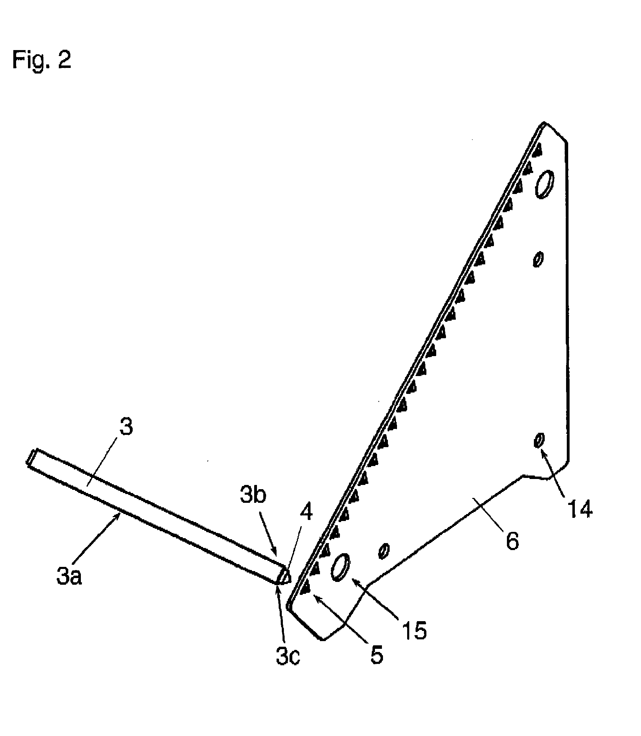

Figur 2 zeigt eine perspektivische Detailansicht eines Seitenteils 6 und eines Profilstabs 3. Dabei ist erkennbar, dass der Profilstab 3 einen Querschnitt in Form eines gleichseitigen Dreiecks aufweist und in dessen Endbereich 3b über entsprechend profilierte Fortsätze 4, und so ausgebildeten Anschlagflächen 3c, verfügt. Das Seitenteil 6 weist zur Aufnahme von Profilstäben 3 eine Vielzahl an Ausnehmungen 5 mit einer den Fortsätzen 4 der Profilstäbe 3 entsprechenden gleichseitig dreieckigen Ausformung auf. Zudem weist das Seitenteil 6 Bohrungen 14 zur Aufnahme von Spannelementen und Wellenaufnahmen 15 auf. Der Verlauf der Ausnehmungen 5 zur Aufnahme der Profilstäbe 3 im Seitenteil 6 des Rahmens 2 ist im hier gezeigten Ausführungsbeispiel ein linearer. Es soll jedoch nicht ausgeschlossen sein, dass ein Verlauf der Ausnehmungen 5 eine gewisse Krümmung aufweisen kann. Die Orientierung der Ausnehmungen 5 kann zudem an eine gewünschte Anstellung bzw. einen gewünschten Versatz der Profilstäbe 3 angepasst sein. Die Ausbildung von Fortsätzen 4 in den Endbereichen 3b der Profilstäbe 3 hat den Vorteil, dass sich die Profilstäbe 3 durch den so entstehenden Anschlag 3c im Rahmen 2 verspannen lassen. Darüber hinaus hat dies den Vorteil, dass sich die Ausnehmungen 5 in den Seitenteilen 6 zur Ausbildung eines gegenüber der Seitenlänge der Querschnittsform geringen Spaltmaßes zwischen den Profilstäben 3 hinreichend nahe aneinanderrücken lassen und trotzdem noch genug Material zwischen den Ausnehmungen 5 verbleibt, um eine ausreichende Belastbarkeit des Seitenteils 6 und somit des Rahmens 2 und des Spaltsiebs 1 zu gewährleisten.

Figur 3 zeigt eine perspektivische Ansicht des Gegenhalters 7. In der gezeigten Ausführung ist dieser flächig ausgeführt und verfügt dabei über mehrere Ausnehmungen in Form der Exzenteraufnahmen 17 und der Bohrungen 16 zur jeweiligen Aufnahme der Exzentervorrichtung 8 bzw. von nicht gezeigten Spannelementen. Die in Montagelage den Profilstäben 3 zugewandte Seite des Gegenhalters 7 weist zudem Ausnehmungen 19 zur im Wesentlichen formschlüssigen Aufnahme bzw. Kontaktierung der im Rahmen 2 befestigten Profilstäbe 3 auf. Die Ausgestaltung der Flanken der Ausnehmungen 19 entspricht dabei im Wesentlichen der Querschnittsform der entsprechenden zu kontaktierenden Abschnitte der Profilstäbe 3. In der gezeigten Ausführung ist der Gegenhalter 7 zur Kontaktierung von Profilstäben 3 mit im Wesentlichen gleichseitigem Querschnitt ausgelegt, die Ausnehmungen 19 weisen also einen von deren Flanken eingeschlossenen Winkel von im Wesentlichen 120° auf. In der gezeigten Ausführung ist der Verlauf der Randkontur der zur Kontaktierung der Profilstäbe 3 vorgesehenen Seite des Gegenhalters 7 dem linearen Verlauf der Ausnehmungen 5 zur Aufnahme der Profilstäbe 3 in den Seitenteilen 6 des Rahmens 2 angepasst. Der Verlauf der Randkontur des Gegenhalters 7, sowie der entsprechende Verlauf der Ausnehmungen 5 in den Seitenteilen 6, kann selbstverständlich auch eine von einem linearen Verlauf abweichende Form, beispielsweise eine gewisse Krümmung, aufweisen.

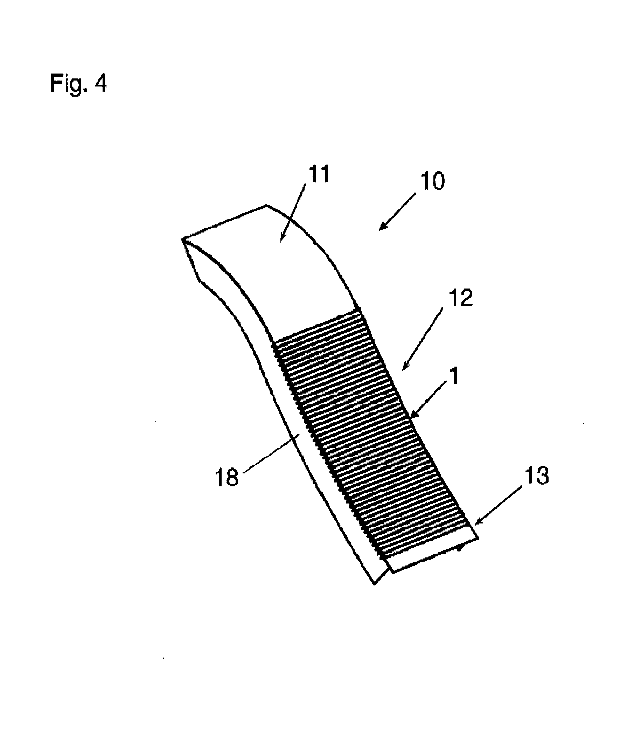

Figur 4 zeigt eine Vorrichtung 10 zur Entnahme von Wasser aus einem fließenden Gewässer, wobei diese über eine gekrümmte Einlaufzone 11, einen gekrümmten Entnahmebereich 12 und eine ebene Auslaufzone 13 verfügt. Die einzelnen Bereiche sind dabei entlang eines entsprechend ausgeformten Seitenteils 17 angeordnet. Im Entnahmebereich 12 kommt ein erfindungsgemäßes Spaltsieb 1 zur Entnahme von Wasser zum Einsatz. Die Ausbildung der Einlaufzone 11 kann an den gewünschten Strömungsverlauf des Gewässers, in welches die Vorrichtung 10 eingesetzt wird, angepasst werden. Die Einlaufzone 11 kann einerseits die Ausbildung einer laminaren Strömung und somit eine ungestörtere Wechselwirkung der das Spaltsieb 1 überströmenden Flüssigkeit mit demselben begünstigen, andererseits kann sie als Beschleunigungsstrecke dienen, wodurch die Selbstreinigung der Vorrichtung 10 unterstützt werden kann. Durch den Einsatz eines erfindungsgemäßen Spaltsiebs 1 im Entnahmebereich 12 der Vorrichtung 10 kann eine lange Lebensdauer, einfache Installation und Wartung und ein gleichbleibend hoher Wirkungsgrad erreicht werden. Durch eine entsprechend ausgeformte Auslaufzone 13 kann ein sicherer Ab- und Weitertransport von über die Vorrichtung 10 gespültem, vom Wasser mittransportiertem Geschiebe gewährleistet werden. Die gewünschte Wasserentnahmerate einer in ein fließendes Gewässer eingesetzten Vorrichtung 10 mit Spaltsieb 1 kann dabei über das Spaltmaß zwischen den Profilstäben 3 und auch durch eine beliebige Parallel- und/oder Hintereinanderanordnung von Spaltsieben 1 im Entnahmebereich 12 - eine entsprechende Ausformung der Einlaufzone 11 und der Auslaufzone 13 natürlich vorausgesetzt - erreicht werden.

### Bezugszeichenliste:

- 1: Spaltsieb
- 2: Rahmen
- 3: Profilstab
- 3a: Kante
- 3b: Endbereich
- 3c: Anschlagfläche
- 4: Fortsatz
- 5: Ausnehmung
- 6: Seitenteil
- 7: Gegenhalter
- 8: Exzenter
- 9: Welle
- 10: Vorrichtung
- 11: Einlaufzone
- 12: Entnahmebereich
- 13: Auslaufzone
- 14: Bohrung
- 15: Wellenaufnahme
- 16: Bohrung
- 17: Seitenteil
- 18: Exzenteraufnahme
- 19: Ausnehmung

## Patentansprüche

1. Spaltsieb zur Entnahme von Wasser aus einem fließenden Gewässer, mit einem Rahmen und einer Vielzahl an Profilstäben, wobei die Profilstäbe im Montagezustand des Spaltsiebs im Wesentlichen quer zur Strömungsrichtung angeordnet sind, **dadurch gekennzeichnet, dass** die Profilstäbe im Rahmen lösbar befestigbar sind.

2. Spaltsieb nach Anspruch 1, wobei die Profilstäbe zumindest abschnittsweise, vorzugsweise entlang ihrer gesamten Länge, einen gleichschenklig dreieckigen Querschnitt aufweisen.

3. Spaltsieb nach Anspruch 2, wobei die Seitenlänge der Basis des der Querschnittsform entsprechenden gleichschenkligen Dreiecks eine Länge von 0,2 bis 5 cm, vorzugsweise 1 cm, aufweist.

4. Spaltsieb nach Anspruch 1, wobei die Profilstäbe zumindest abschnittsweise, vorzugsweise entlang ihrer gesamten Länge, einen gleichseitig dreieckigen Querschnitt aufweisen.

5. Spaltsieb nach Anspruch 4, wobei die Seitenlänge des der Querschnittsform entsprechenden gleichseitigen Dreiecks eine Länge von 0,2 bis 5 cm, vorzugsweise 1 cm, aufweist.

6. Spaltsieb nach einem der Ansprüche 1 bis 5, wobei die Profilstäbe in den Endbereichen profilierte Fortsätze aufweisen.

7. Spaltsieb nach Anspruch 6, wobei die Form des Querschnitts der profilierten Fortsätze im Wesentlichen der Form des Querschnitts der Profilstäbe entspricht.

8. Spaltsieb nach einem der Ansprüche 1 bis 7, wobei im Rahmen Ausnehmungen zur Aufnahme der Profilstäbe vorgesehen sind.

9. Spaltsieb nach einem der Ansprüche 1 bis 8, wobei die Befestigung der Profilstäbe im Rahmen über einen Formschluss erfolgt.

10. Spaltsieb nach einem der Ansprüche 1 bis 9, wobei die Befestigung der Profilstäbe im Rahmen über eine Verschraubung erfolgt.

11. Spaltsiebs nach einem der Ansprüche 1 bis 10, wobei der Rahmen zwei flächige Seitenteile aufweist, zwischen denen die Profilstäbe lösbar befestigbar sind.

12. Spaltsieb nach einem der Ansprüche 1 bis 11, wobei der Rahmen zumindest einen Gegenhalter zum Verspannen der Profilstäbe im Rahmen aufweist.

13. Spaltsieb nach Anspruch 12, wobei der zumindest eine Gegenhalter flächig und mit einer auf Seite der Profilstäbe dem Verlauf der Ausnehmungen zur Aufnahme der Profilstäbe im Rahmen folgenden Rand-Kontur, vorzugsweise mit zusätzlichen entsprechenden Ausnehmungen in den Kontaktpunkten mit den Profilstäben, ausgebildet ist.

14. Spaltsieb nach einem der Ansprüche 12 oder 13, wobei für den zumindest einen Gegenhalter zumindest eine, vorzugsweise über eine Welle betätigbare, Exzentervorrichtung vorgesehen ist.

15. Vorrichtung zur Entnahme von Wasser aus einem fließenden Gewässer, mit einer Einlaufzone, einem Entnahmebereich und einer Auslaufzone, **dadurch gekennzeichnet, dass** der Entnahmebereich zumindest ein Spaltsieb nach einem der Ansprüche 1-14 aufweist.
